# EUROPÄISCHE PATENTSCHRIFT

(11) **EP 0 600 500 B1**
(45) Veröffentlichungstag und Bekanntmachung des Hinweises auf die Patenterteilung: **11.06.1997**
(21) Anmeldenummer: 93119472.4
(22) Anmeldetag: 02.12.1993
(51) Int. Cl.: B60D 1/48, B60D 1/02

(54) **Anordnung einer Anhängerkupplung an einem Fahrzeug**
Vehicle trailer coupling arrangement
Aménagement d'un attelage de remorque pour véhicule

(30) Priorität: 02.12.1992 DE 4240559
(43) Veröffentlichungstag der Anmeldung: 08.06.1994
(73) Patentinhaber: ROCKINGER Spezialfabrik für Anhängerkupplungen GmbH & Co., D-80935 München (DE)
(72) Erfinder: Wohlhüter, Gerhard, Dipl.-Ing., D-80997 München (DE)
(74) Vertreter: Weickmann, Heinrich, Dipl.-Ing.

(56) Entgegenhaltungen:
- EP-A- 0 014 287
- DE-A- 3 530 565
- US-A- 4 202 562
- US-A- 4 451 066
- US-A- 5 102 156

## Beschreibung

Die Erfindung betrifft eine Anordnung einer Anhängerkupplung an einem Zugfahrzeug, wobei die Anhängerkupplung an einer Zugstange befestigt ist, wobei weiter die Zugstange in einem Lagerrohr gelagert ist und wobei das Lagerrohr an einem Fahrzeugrahmen des Zugfahrzeugs befestigt ist.

Aus der US-A-4 202 562 ist eine Anordnung einer Anhängerkupplung nach dem Oberbegriff des Patentanspruchs 1 bekannt. Die Anhängerkupplungs-Anordnung nach dieser Druckschrift ist bevorzugt für Zugfahrzeuge gedacht, bei denen bei Bedarf ein Wohnwagenaufbau auf der Ladefläche angebracht werden kann. Da diese Aufbauten in der Regel deutlich über das in Fahrtrichtung hintere Ende der Ladefläche überstehen und dadurch die am Zugfahrzeug angebrachte Anhängerkupplung verdeckt wird, ist eine zusätzliche Zugstange zwischen einem am Zugfahrzeug angebrachten Lagerrohr und dem Kupplungskörper zwischengeschaltet; die zusätzliche Zugstange ist über Querträger mit dem Aufbau am nachlaufenden Ende des Fahrzeugs verbunden.

Zum Stand der Technik wird weiter auf die DE-OS 3 530 565 verwiesen. Bei dieser bekannten Anordnung ist das Lagerrohr an der in Fahrrichtung vorderen Seite einer Traverse angeflanscht. Die Zugstange durchsetzt die Traverse annähernd mit ihrem vollem Querschnitt in einer diesem vollem Querschnitt angenähert entsprechenden Bohrung und verläuft dann weiter durch das Lagerrohr zu dessen in Fahrtrichtung vorderem Ende. In dem Lagerrohr ist die Zugstange durch eine Gleithülse geringfügig verschiebbar und verdrehbar geführt. An ihrem in Fahrtrichtung vorderen Ende ist die Zugstange durch Segmente gegenüber dem Lagerrohr abgestützt, die einerseits in eine Umfangsnut der Zugstange eingreifen und sich andererseits über elastische Puffer an einer Schulterfläche des Lagerrohrs nahe dessen in Fahrrichtung vorderem Ende abstützen.

Diese bekannte Konstruktion hat sich in der Praxis hervorragend bewährt. Sie hat sich auch dort bewährt, wo an dem Kupplungskörper in größerem Maße Vertikalkräfte zu erwarten sind, insbesondere dort, wo an ein Zugfahrzeug ein sog. Zentralachsanhänger angekuppelt werden soll, dessen Deichsel auf die Kupplung größere Vertikalkräfte ausübt, um den Zentralachsanhänger gegen statische und dynamische Kippmomente um eine Querachse im Bereich der Zentralachse bzw. zweier Zentralachsen abzustützen. Man hat es als ganz natürlich empfunden, daß man im Falle des beabsichtigten Ankuppelns schwerer Zentralachsanhänger das Lagerrohr ebenso wie Kupplungskörper und Zugstange stärker hat ausbilden müssen und auch die Traverse.

Erfindungsgemäß wird demgegenüber vorgeschlagen, daß das Lagerrohr an seitlichen Längsträgern des Fahrzeugrahmens durch eine innerhalb der Längserstreckung dieser Längsträger nach unten ausladend angeordnete, in sich steife Kastenkonstruktion gegen Momente abgestützt ist, welch in einem sich entlang dem Lagerrohr erstreckenden Stützbereich des Lagerrohrs mit diesem verbunden ist und mit den Längsträgern in Verbindungszonen verbunden ist.
Es ist ohne weiteres einzusehen, daß durch eine derartige Abstützung eine Entlastung sowohl bezüglich vertikaler Querkräfte als auch bezüglich Torsionsbelastungen um eine horizontale Querachse erreicht wird.

Eine solche Entlastung hat man bisher nicht für notwendig gehalten und man war insbesondere bisher nicht gewillt, um einer solchen Entlastung willen die genormte Befestigung des Lagerrohrs an der Traverse mittels eines genormten Schraubflansches aufzugeben.
Die Abweichung von einer Norm ist nämlich für einen einzelnen Hersteller immer mit großen Mühen in der Konstruktion und auch mit großer Überzeugungsarbeit bei der Kundschaft verbunden. Man hat vielmehr ohne weiteres hingenommen, das Lagerrohr eben kräftiger gestalten zu müssen.

Es wurde aber nun folgendes gefunden: Auch bei noch so kräftiger Gestaltung des Lagerrohrs ist eine elastische Verformung des Lagerrohrs bei Belastung der Kupplung in vertikaler Richtung nicht zu vermeiden. Dies führt aber dazu, daß der Eingriff der Zugstange mit der Innenumfangsfläche des Lagerrohrs bzw. mit zwischen Lagerrohr und Zugstange eingesetzten Gleithülsen zur Traverse hin wandert. Es tritt also eine Annäherung der Kräfte des die Momentenabstützung der Zugstange in dem Lagerrohr auftretenden Kräftepaars ein und zwar zum rückwärtigen Ende des Lagerrohrs hin. Kleiner werdender Abstand der Kräfte dieses Kräftepaars bedeutet aber, daß die Kräfte dies Kräftepaars zur Abstützung eines gegebenen Moments noch größer werden und demzufolge die Verstärkung des Lagerrohrs sehr viel weiter getrieben werden muß, als es einer proportionalen Vergrößerung der an der Kupplung angreifenden Vertikalkräfte entspräche.

Bei der erfindungsgemäßen Lösung ist eine wesentliche elastische Verformung des Lagerrohrs nicht mehr zu befürchten. Die Folge davon ist, daß auch ein Zusammenwandern der Kräfte des auftretenden Kräftepaars nicht mehr eintritt. Die Kräfte des Kräftepaars behalten vielmehr einen Abstand bei, der mindestens der Länge des Stützbereichs entspricht. Damit kann nunmehr das Lagerrohr auch bei zu erwartenden Vertikalkräften an der Anhängerkupplung in einem Maße leichter gestaltet werden, das man nach den bisherigen Erfahrungen nicht für möglich gehalten hat.

Wenn hier von einem Zugfahrzeug gesprochen wird, so ist dieser Ausdruck allgemein zu verstehen. Es kann sich um ein selbstfahrendes Zugfahrzeug beispielsweise um einen Lastkraftwagen oder um einen Schlepper handeln. Zugfahrzeug kann aber auch ein Anhänger eines LKWs oder eines Schleppers sein, der seinerseits wieder an seinem vorderen Ende mit einem weiteren Anhänger gekuppelt werden soll.

Wenn hier weiter von einem Stützbereich gesprochen wird, so ist es nicht notwendig, daß in dem gesamten Stützbereich tatsächlich abgestützt wird. Wenn z.B. zwei punktuelle Abstützungen am in Fahrtrichtungen vorderen und am in Fahrtrichtung rückwärtigen Ende des Lagerrohrs zwischen Lagerrohr und Kastenkonstruktion vorgesehen sind, so bedeutet der Abstand zwischen diesen beiden punktuellen Abstützungen in Längsrichtung des Lagerrohrs den "Stützbereich" im Sinne der Erfindung, gleichgültig ob zwischen diesen beiden punktuellen Abstützungen noch weitere Abstützstellen vorhanden sind oder unter Umständen sogar eine durchgehende Abstützung.

Abstützung im Stützbereich soll bedeuten, daß das Lagerrohr im Stützbereich im wesentlichen starr an der Kastenkonsruktion abgestützt ist, also etwa mit solcher Vertikalsteifigkeit, wie sie bei der vorbekannten Lösung nach der DE-OS 35 30 565 nur im Traversenbereich gegeben ist.

Der Stützbereich erstreckt sich beispielsweise über mindestens 30 %, vorzugsweise mindestens 50 %, höchstvorzugsweise über mindestens 70 %, der Lange des Lagerrohrs. Der Stützbereich grenzt bevorzugt an das in Fahrtrichtung rückwärtige Ende des Lagerrohrs an.

Das Lagerrohr kann, wie schon angedeutet, an den beiden Enden des Stützbereichs punktuell abgestützt sein, gegebenenfalls zusätzlich auch dazwischen. Auch eine gleichmäßige Abstützung über die ganze Länge des Lagerrohrs ist denkbar.

Das Lagerrohr kann zumindest an den Enden des Stützbereichs mit der Kastenkonstruktion durch eine Schweißverbindung verbunden sein. Es ist aber auch denkbar, das Lagerrohr mit Verbindungsanschlüssen zu versehen, welche andere Befestigungsarten zwischen Lagerrohr und Kastenkonstruktion gestatten. So könnte man daran denken, an der Außenumfangsfläche des Lagerrohrs Schraub- oder Nietbunde anzuformen, insbesondere dann, wenn das Lagerrohr in Schmiedetechnik hergestellt wird.

Die Verbindung zwischen Kastenkonstruktion und Längsträgern kann betriebsmäßig unlösbar sein, also z.B. eine Schweißverbindung. Denkbar ist es aber auch, daß die Kastenkonstruktion mit den Längsträgern betriebsmäßig lösbar verbunden ist. In diesem Fall kann man beispielsweise Lagerrohr und Kastenkonstruktion als genormte Baugruppe ausgestalten die ihrerseits an genormten Befestigungsstellen der Längsträger befestigt werden kann, z.B. durch Niete oder durch Schrauben. Dies könnte dann dazu führen, daß der Erstausrüster eines Fahrzeugs oder auch der Betreiber einer Spedition oder eines Fuhrparks das Lagerrohr grundsätzlich als Teil einer Kastenkonstruktion bezieht und diese Kastenkonstruktion dann am Fahrzeugrahmen anbaut. Hier könnte wieder eine Normung erreicht werden.

Um die Verbindung der Kastenkonstruktion mit den Längsträgern möglichst steif zu machen, ist es vorteilhaft, wenn die Kastenkonstruktion im Bereich ihrer Verbindung mit den Längsträgern gegenüber dem Stützbereich in Längsrichtung des Lagerrohrs verlängert ist und/oder die Kastenkonstruktion im Bereich ihrer Verbindung mit den Längsträgern in Richtung der Querachse gegenüber dem Außendurchmesser des Lagerrohrs verbreitert ist. Man kommt auf diese Weise zu etwa pyramidenstumpfförmigen Kastenkonstruktion, die im Bereich ihrer kleinen Basis das Lagerrohr tragen und im Bereich ihrer großen Basis mit den Längsträgern verbunden sind. Auf diese Weise kann man die Verbindungseinheit in Leichtbauweise ausgestalten und ihr trotzdem ausreichende Steifigkeit verleihen.

Die Kastenkonstruktion kann an mindestens einem, vorzugsweise an beiden Enden des Stützbereichs je ein Stützblech aufweist, welches zumindest im Bereich des Lagerrohrs annähernd orthogonal zur Längsachse des Fahrzeugs steht. Die Verbindung des Stützblechs mit dem Lagerrohr kann dann etwa in der Weise ausgebildet sein, daß das Stützblech mit einer Anlagekante an dem Lagerrohr anliegt, welche sich ausgehend von einer Scheitellinie der Außenumfangsfläche des Lagerrohrs in beiden Umfangsrichtungen über jeweils einen Winkel von mindestens 60°, vorzugsweise mindestens 75°, höchstvorzugsweise mindestens 90°, erstreckt. Darüber hinaus ist es auch denkbar, in dem Stützblech ein ringsum geschlossenes Loch zur Aufnahme des Lagerrohrs vorzusehen. Auf diese Weise erhält man eine Anlagekante, die sich über 360° erstreckt.

Die Verbindung der Anlagekante mit dem Stützblech kann durch Verschweißen hergestellt werden. Denkbar ist aber auch, daß an dem Lagerrohr ein Ringflansch oder Teilringflansch in im wesentlichen achsnormaler Ebene angeformt oder sonstwie befestigt ist und daß dieser Flansch mit dem Stützblech durch Schrauben oder Niete verbunden ist. Zwei Stützbleche haben unter Umständen noch keine ausreichende Steifigkeit in Fahrtrichtung. Um die Steifigkeit in Fahrtrichtung zu verbessern wird deshalb in Betracht gezogen, daß die Stützbleche an zugehörigen Rändern durch Verbindungsbleche miteinander verbunden, insbesondere verschweißt sind, welche im wesentlichen parallel zur Längsachse des Fahrzeugs verlaufen. Bei einer solchen Konstruktion kann eine weitere Vorsteifung dadurch erzielt werden, daß auch die Verbindungsbleche mit an dem Lagerrohr anliegenden Rändern mit dem Lagerrohr verschweißt sind.

Eine weitere Versteifungswirkung kann dadurch erreicht werden, daß die durch die Stützbleche und die Verbindungsbleche gebildete Kastenkonstruktion durch innere Versteifungsmittel ausgesteift ist.

Die Verbindungsbleche können mit lagerrohrnahen Kanten oder Rändern an dem Lagerrohr angeschweißt oder angeflanscht oder angeschraubt sein.

Hat man nun eine solche Kastenkonstruktion mit zur Fahrrichtung orthogonalen und/oder mit zur Fahrtrichtung parallelen Blechen, so können diese an den Längsträgern wiederum angeschweißt oder gegebenenfalls auch lösbar befestigt werden. Dabei können die Längsträgernahen Bereiche der Stützbleche bzw. der Verbindungsbleche als Befestigungsflansche dienen und je nach Befestigungsart einfach oder mehrfach zur Befestigung an der Trägerkonstruktion durch Schrauben, Nieten oder dgl. perforiert sein. Hierbei steht wiederum der Gedanke einer Normung im Vordergrund.

Nach einer weiteren Ausführungsform der Erfindung ist vorgesehen, daß die Kastenkonstruktion mit dem Lagerrohr durch eine Flanschverbindung, insbesondere eine Schraubflanschverbindung verbunden ist. Diese Ausführungsform ist insbesondere dann vorteilhaft, wenn eine Demontage des Lagerrohrs unter Verbleib der Kastenkonstruktion an den Längsträgern beabsichtigt ist, etwa zum Zwecke der Reparatur oder des Austauschs des Lagerrohrs.

Dabei ist es möglich, daß Verbindungsflansche des Lagerrohrs einstückig mit dem Lagerrohr ausgeführt sind. Es ist aber auch denkbar, daß die Flansche mit dem Lagerrohr verschweißt sind etwa in der Weise, daß zwei Flansche von ein und derselben Platte gebildet sind, welche an dem Lagerrohr anliegend mit diesem verschweißt ist.

Insbesondere kann vorgesehen sein, daß die Verbindungsflansche des Lagerrohrs tangential zu einer Achse des Lagerrohrs angeordnet sind und in Richtung dieser Achse länglich - ggf. mit Unterbrechungen - ausgeführt sind.

Eine einfache Möglichkeit, um Flansche der Kastenkonstruktion bereitzustellen, besteht darin, daß Flansche der Kastenkonstruktion an Verbindungsblechen der Kastenkonstruktion angebracht sind, welche Verbindungsbleche durch Stützbleche miteinander verbunden sind, wobei die Verbindungsbleche im wesentlichen parallel zur Achse des Lagerrohrs verlaufen und die Stützbleche zumindest im Bereich des Lagerrohrs im wesentlichen orthogonal zur Achse des Lagerrohrs stehen.

Dabei ist es weiter möglich, daß die Flansche der Kastenkonstruktion in Richtung der Längsachse des Lagerrohrs länglich - ggf. mit Unterbrechungen - ausgeführt sind. Die Flansche können dann mit den Verbindungsblechen insbesondere einstückig zusammenhängen und durch Abbiegen der Verbindungsbleche gebildet sein.

Für den Montagevorgang ist es vorteilhaft, wenn die Flansche der Kastenkonstruktion aufeinander zu gerichtet sind. Man kann dann die Flansche des Lagerrohrs in einem ersten Schritt auf die Flansche der Kastenkonstruktion auflegen, die Bohrlöcher gegeneinander justieren und dann die Verbindungsbolzen setzen und anziehen.

Die beiliegenden Figuren erläutern die Erfindung anhand eines Ausführungsbeispiels. Es zeigt:
- Figur 1: einen Längsschnitt durch eine Anhängerkupplung mit Zugstange, Lagerrohr und Verbindungskonstruktion;
- Figur 2: die Anordnung der Verbindungskonstruktion an einem Fahrzeugrahmen;
- Figur 3: einen Teillängsschnitt entsprechend demjenigen der Fig. 1 bei einer weiteren Ausführungsform der Erfindung nach Linie III-III der Fig. 4 und
- Figur 4: eine Teilansicht entsprechend Pfeil IV der Fig. 3.

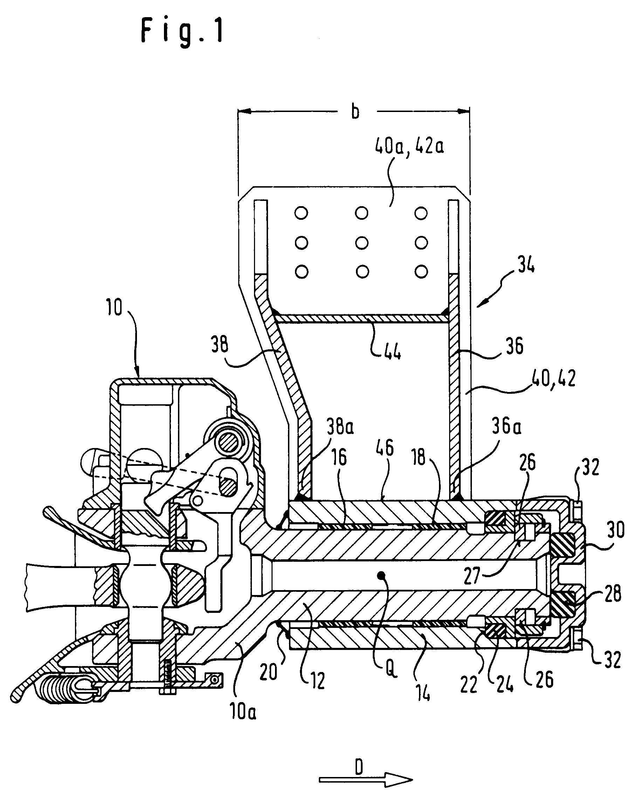

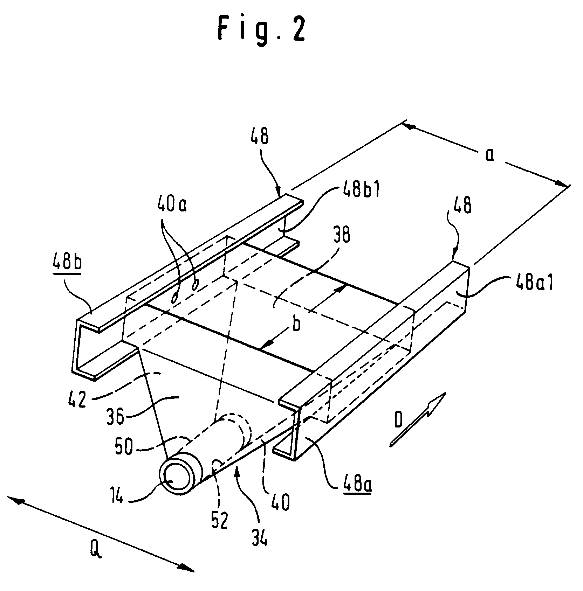

Man erkennt in Fig. 1 eine Anhängerkupplung 10, welche der Ausführungsform nach DE-OS 35 30 565 im wesentlichen entspricht. Auf diese Offenlegungsschrift wird zur Ergänzung der Offenbarung verwiesen. Der Kupplungskörper 10a dieser Anhängerkupplung ist einstückig mit einer Zugstange 12 hergestellt, beispielsweise geschmiedet. Die Zugstange 12 ist in einem Lagerrohr 14 aufgenommen und in diesem durch Kunststoffbüchsen 16 und 18 zur Drehung und axialen Verschiebung gelagert. Bei 20 ist eine Dichtung vorgesehen. Das vordere Ende der Zugstange ist an einer Schulterfläche 22 des Lagerrohrs 14 über elastische Puffer 24 abgestützt und zwar unter Vermittlung von Segmentteilen 26, die von einer Ringnut 27 an der Außenumfangsfläche der Zugstange 12 aufgenommen sind. Das vordere Ende der Zugstange 12 ist zwischen den Puffern 24 und weiteren Puffern 28 verspannt und zwar vermittels eines Deckels 30, der über Spannschrauben 32 mit dem Lagerrohr 14 zusammengespannt ist. Auch insoweit kann zur weiteren Detailoffenbarung auf die DE-OS 35 30 565 verwiesen werden. Das Lagerrohr 14 ist mit einer Kastenkonstruktion 34 verschweißt. Diese Kasenkonstruktion 34 besteht aus einem vorderen Stützblech 36, einem rückwärten Stützblech 38, Verbindungsblechen 40, 42 und einem Versteifungsblech 44. Die Stützbleche 36 und 38 sind längs ihrer dem Lagerrohr 14 nahen Kanten 36a und 38a mit dem Lagerrohr 14 verschweißt und zwar über einen Bogen, der sich jeweils um ca. 90° beiderseits der Scheitellinie 46 in Umfangsrichtung des Lagerrohrs erstreckt. Die Stützbleche 36 und 38 (siehe auch Fig. 2) divergieren nach oben über wenigstens einen Teil ihrer Höhe, so daß eine größere Verbindungslänge b zur Verbindung mit dem Fahrzeugrahmen 48 (Fig. 2) erzielt wird. Ebenso divergieren die beiden Verbindungsbleche 40 und 42 nach oben, so daß auch in Richtung der Querachse Q eine größere Verbindungsbreite a entsteht entsprechend dem Abstand der beiden den Fahrzeugrahmen bildenden Längsträger 48a und 48b. Die Kastenkonstruktion 34 gemäß Fig. 1 erhält ihre Steifigkeit durch die besondere Art der Formgebung, so daß sie aus verhältnismäßig dünnen Blechen aufgebaut werden kann. Die Verbindungsbleche sind in ihrem oberen Bereich als Lochflansch 40a, 42a ausgebildet. Der Zusammenhang mit Fig. 2 ist durch die Löcher in Fig. 2 angedeutet. Diese Lochflansche 40a, 42a können mit den Stegen 48b1 und 48a1 der Längsträger 48a und 48b verschraubt oder vernietet werden.

Die Längsträger 48a und 48b sind in einer an sich bekannten Weise als C-Träger ausgeführt. Die Kastenkonstruktion 34 ist so gewählt, daß sie aufgrund ihrer Länge und Breite keine wesentlichen Biegemomente in die C-Träger 48a und 48b einleitet und diese überdies versteift. Aus Fig. 2 ist weiterhin zu erkennen, daß auch die Verbindungsbleche 40 und 42 mit dem Lagerrohr 14 längs Schweißlinien 50, 52 verschweißt sind.

Die aus der Kastenkonstruktion und dem Lagerrohr 14 gebildete Baugruppe kann als vorgeformte Baugruppe genormt sein und mit ihrem Lochbild im Bereich 40a, 42a an eine entsprechende Lochung der Längsträger 48a und 48b angepaßt sein.

Die Fahrtrichtung ist in den Fig. 1 und 2 mit Pfeilen D angedeutet. Auf diese Pfeilrichtung beziehen sich auch die Begriffe "vorne", "hinten" usw..

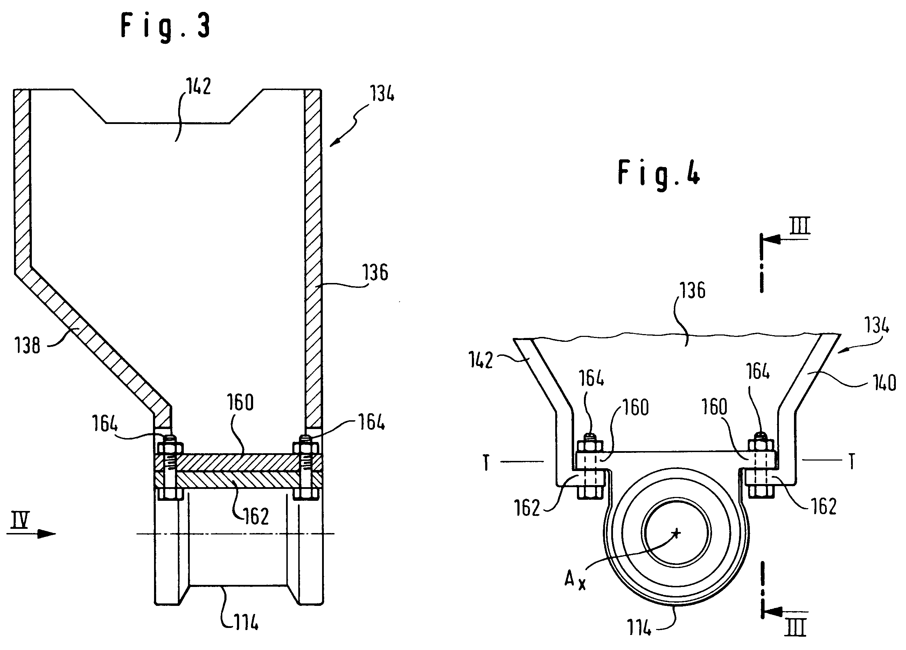

In den Fig. 3 und 4 ist eine abgewandelte Ausführungsform dargestellt. Analoge Teile sind mit den gleichen Bezugszeichen versehen wie in den Fig. 1 und 2, jeweils vermehrt um die Zahl 100.

In den Fig. 3 und 4 erkennt man, daß das Lagerrohr 114 mit Flanschen 160 versehen ist, die oberhalb der Achse des Lagerrohrs 114 angeordnet sind, und zwar annähernd in einer Tangentenebene TT. Andererseits sind an den Verbindungsblechen 140 und 142 an deren unteren Enden Flansche 162 angeordnet, die aufeinander zu gerichtet sind. Die Flansche 160 des Lagerrohrs 114 sind in die Flansche 162 der Verbindungsbleche 140 und 142 eingehängt und mit diesen durch Schraubbolzen 164 verschraubt. Ein Vorteil dieser Ausführungsform liegt darin, daß das Lagerrohr 114 ohne Abbau der Kastenkonstruktion 134 abgenommen und repariert oder ausgetauscht werden kann. Hierzu ist es natürlich erforderlich, daß die Flansche 160 in der Achsrichtung Aₓ des Lagerrohrs in die Kastenkonstruktion eingeschoben werden können, indem mindestens eines der Stützbleche 136,138 über den Flanschen 162 endet, so daß ein Einführungsschlitz für die Flansche 160 geschaffen ist.

## Patentansprüche

1. Anordnung einer Anhängerkupplung (10) an einem Zugfahrzeug (48),
wobei die Anhängerkupplung (10) an einer Zugstange (12) befestigt ist,
wobei weiter die Zugstange (12) in einem Lagerrohr (14) gelagert ist und
wobei das Lagerrohr (14) an einem Fahrzeugrahmen (48) des Zugfahrzeugs befestigt ist,
dadurch gekennzeichnet,
daß das Lagerrohr (14) an seitlichen Längsträgern (48a,48b) des Fahrzeugrahmens durch eine innerhalb der Längserstreckung dieser Längsträger (48a, 48b) nach unten ausladend angeordnete, in sich steife Kastenkonstruktion (34) gegen Momente abgestützt ist, welche in einem sich entlang dem Lagerrohr (14) erstreckenden Stützbereich (36a,38a) des Lagerrohrs (14) mit diesem verbunden ist und mit den Längsträgern (48a,48b) in Verbindungszonen (40a,42a) verbunden ist.

2. Anordnung nach Anspruch 1,
dadurch gekennzeichnet,
daß sich der Stützbereich (36a-38a) über mindestens 30 %, vorzugsweise mindestens 50 %, höchst vorzugsweise über mindestens 70 %, des Lagerrohrs (14) erstreckt.

3. Anordnung nach einem der Ansprüche 1 und 2,
dadurch gekennzeichnet,
daß der Stützbereich (36a-38a) an das in Zugrichtung D hintere Ende des Lagerrohrs (14) angrenzt.

4. Anordnung nach einem der Ansprüche 1 bis 3,
dadurch gekennzeichnet,
daß das Lagerrohr (14) an den beiden Enden (36a,38a) des Stützbereiches (36a-38a) punktuell abgestützt ist.

5. Anordnung nach einem der Ansprüche 1 bis 4,
dadurch gekennzeichnet,
daß das Lagerrohr (14) zumindest an den Enden (36a,38a) des Stützbereichs (36a-38a) mit der Kastenkonstruktion (34) durch eine Schweißverbindung (bei 36a,38a) verbunden ist.

6. Anordnung nach einem der Ansprüche 1 bis 5,
dadurch gekennzeichnet,
daß die Kastenkonstruktion (34) mit den Längsträgern (48a,48b) betriebsmäßig unlösbar verbunden ist.

7. Anordnung nach einem der Ansprüche 1 bis 5,
dadurch gekennzeichnet,
daß die Kastenkonstruktion (34) mit den Längsträgern (48a,48b) betriebsmäßig lösbar verbunden ist.

8. Anordnung nach einem der Ansprüche 1 bis 7,
dadurch gekennzeichnet,
daß die Kastenkonstruktion (34) im Bereich ihrer Verbindung mit den Längsträgern (48a,48b) gegenüber dem Stützbereich (36a-38a) in Längsrichtung (D) des Lagerrohrs (14) verlängert ist.

9. Anordnung nach einem der Ansprüche 1 bis 8,
dadurch gekennzeichnet,
daß die Kastenkonstruktion (34) im Bereich ihrer Verbindung mit den Längsträgern (48a,48b) in Richtung der Querachse (Q) gegenüber dem Außendurchmesser des Lagerrohrs (14) verbreitert ist.

10. Anordnung nach einem der Ansprüche 1 bis 9,
dadurch gekennzeichnet,
daß die Kastenkonstruktion (34) an mindestens einem, vorzugsweise an beiden Enden des Stützbereichs (36a-38a), je ein Stützblech (36,38) aufweist, welches zumindest im Bereich des Lagerrohrs (14) annähernd orthogonal zur Längssachse (D) des Fahrzeugs steht.

11. Anordnung nach Anspruch 10,
dadurch gekennzeichnet,
daß das Stützblech (36,38) mit einer Anlagekante (36a,38a) an dem Lagerrohr (14) anliegt, welche sich ausgehend von einer Scheitellinie (46) der Außenumfangsfläche des Lagerrohrs (14) in beiden Umfangsrichtungen über jeweils einen Winkel von mindestens 60°, vorzugsweise mindestens 75°, höchstvorzugsweise mindestens 90°, erstreckt.

12. Anordnung nach Anspruch 11,
dadurch gekennzeichnet,
daß die Anlagekante (36a-38a) mit dem Lagerrohr (14) verschweißt, verschraubt oder vernietet ist.

13. Anordnung nach einem der Ansprüche 10 bis 12,
dadurch gekennzeichnet,
daß die Stützbleche (36,38) an zugehörigen Rändern durch Verbindungsbleche (40,42) miteinander verbunden, insbesondere verschweißt sind, welche im wesentlichen parallel zur Längsachse (D) des Fahrzeugs verlaufen.

14. Anordnung nach Anspruch 13,
dadurch gekennzeichnet,
daß die Verbindungsbleche (40,42) mit an dem Lagerrohr (14) anliegenden Rändern (50,52) mit dem Lagerrohr (14) verschweißt, vernietet oder verschraubt sind.

15. Anordnung nach einem der Ansprüche 13 und 14,
dadurch gekennzeichnet,
daß die durch die Stützbleche (36,38) und die Verbindungsbleche (40,42) gebildete Kastenkonstruktion (34) durch innere Versteifungsmittel (44) ausgesteift ist.

16. Anordnung nach einem der Ansprüche 10 bis 15,
dadurch gekennzeichnet,
daß die lagerrohrfernen Bereiche (40a,42a) der Stützbleche (36,38) oder/und der Verbindungsbleche (40,42) zur Befestigung an den Längsträgern (48a,48b) ausgebildet sind.

17. Anordnung nach Anspruch 16,
dadurch gekennzeichnet,
daß die lagerrohrfernen Bereiche (40a,42a) der Stützbleche (36,38) und/oder der Verbindungsbleche (40,42) als Befestigungsflansche ausgebildet sind.

18. Anordnung nach Anspruch 17,
dadurch gekennzeichnet,
daß die Befestigungsflansche (40a,42a) als Mehrlochplatten zur Schraubbefestigung oder Nietbefestigung an den Längsträgern (48a,48b) ausgebildet sind.

19. Anordnung nach einem der Ansprüche 1 bis 18,
dadurch gekennzeichnet,
daß die Kastenkonstruktion (134) mit dem Lagerrohr(114) durch eine Flanschverbindung (160,162,164), insbesondere eine Schraubflanschverbindung, verbunden ist.

20. Anordnung nach Anspruch 19,
dadurch gekennzeichnet,
daß Verbindungsflansche (160) des Lagerrohrs (114) einstückig mit dem Lagerrohr (114) ausgeführt sind.

21. Anordnung nach einem der Ansprüche 19 und 20,
dadurch gekennzeichnet,
daß die Verbindungsflansche (160) des Lagerrohrs (114) tangential zu einer Achse (Aₓ) des Lagerrohrs (114) angeordnet sind und in Richtung dieser Achse (Aₓ) länglich - ggf. mit Unterbrechungen - ausgeführt sind.

22. Anordnung nach einem der Ansprüche 19 bis 21,
dadurch gekennzeichnet,
daß Flansche (162) der Kastenkonstruktion (134) an Verbindungsblechen (140,142) der Kastenkonstruktion (134) angebracht sind, welche Verbindungsbleche (140,142) durch Stützbleche (136,138) miteinander verbunden sind, wobei die Verbindungsbleche (140,142) im wesentlichen parallel zur Achse (Aₓ) des Lagerrohrs (114) verlaufen und die Stützbleche (136,138) zumindest im Bereich des Lagerrohrs (114) im wesentlichen orthogonal zur Achse (Aₓ) des Lagerrohrs (114) stehen.

23. Anordnung nach Anspruch 22,
dadurch gekennzeichnet,
daß die Flansche (162) der Kastenkonstruktion (134) in Richtung der Längsachse (Aₓ) des Lagerrohrs (114) länglich - ggf. mit Unterbrechungen - ausgeführt sind.

24. Anordnung nach Anspruch 23,
dadurch gekennzeichnet,
daß die Flansche (162) der Kastenkonstruktion (134) aufeinander zu gerichtet sind.

25. Anordnung nach Anspruch 24,
dadurch gekennzeichnet,
daß die Flansche (160) des Lagerrohrs (114) auf der Oberseite der Flansche (162) der Kastenkonstruktion (134) aufliegen.

## Claims

1. An assembly of a trailer coupling (10) on a towing vehicle (48), wherein the trailer coupling (10) is secured to a towbar (12), wherein also the towbar (12) is mounted in a bearing tube (14) and wherein the bearing tube (14) is secured to a vehicle frame (48) of the towing vehicle, characterised in that on longitudinal side members (48a,48b) of the vehicle frame the bearing tube (14) is braced against moments by an inherently rigid box structure (34) which is arranged inside the longitudinal extension of these longitudinal members (48a,48b) and projecting downwards, and which in a support region (36a, 38a) of the bearing tube (14) extending along the bearing tube (14) is connected to the latter and is connected to the longitudinal members (48a,48b) in connecting zones (40a,42a).

2. An assembly according to Claim 1, characterised in that the support region (36a-38a) extends over at least 30 %, preferably at least 50 %, and most preferably over at least 70 %, of the bearing tube (14).

3. An assembly according to either Claim 1 or Claim 2, characterised in that the support region (36a-38a) adjoins the rear end of the bearing tube (14) in towing direction D.

4. An assembly according to any one of Claims 1 to 3, characterised in that the bearing tube (14) is supported at selected points at both ends (36a,38a) of the support region (36a-38a).

5. An assembly according to any of Claims 1 to 4, characterised in that at least at the ends (36a,38a) of the support region (36a-38a) the bearing tube (14) is connected to the box structure (34) by a welded joint (36a,38a).

6. An assembly according to any of Claims 1 to 5, characterised in that in the box structure (34) is connected to the longitudinal members (48a,48b) in operation in a non-detachable manner.

7. An assembly according to any one of Claims 1 to 5, characterised in that the box structure (34) is connected to the longitudinal members (48a,48b) in operation in a detachable manner.

8. An assembly according to any one of Claims 1 to 7, characterised in that in the vicinity of its connection to the longitudinal members (48a,48b) the box structure (34) is extended with respect to the support region (36a-38a) in the longitudinal direction (D) of the bearing tube (14).

9. An assembly according to any one of Claims 1 to 8, characterised in that in the vicinity of its connection to the longitudinal members (48a,48b) the box structure (34) is widened with respect to the outer diameter of the bearing tube (14) in the direction of the transverse axis (Q).

10. An assembly according to any one of Claims 1 to 9, characterised in that at at least one end, preferably at both ends of the support region (36a-38a) the box structure (34) has a respective support plate (36,38) which at least in the vicinity of the bearing tube (14) is disposed approximately orthogonally to the longitudinal axis (D) of the vehicle.

11. An assembly according to Claim 10, characterised in that the support plate (36,38) abuts against the bearing tube (14) with an abutment edge (36a,38a) which, starting from a vertical line (46) of the outer circumferential surface of the bearing tube (14), extends in both circumferential directions through a respective angle of at least 60°, preferably of at least 75°, most preferably of at least 90°.

12. An assembly according to Claim 11, characterised in that the abutment edge (36a-38a) is welded, screwed or rivetted to the bearing tube (14).

13. An assembly according to any one of Claims 10 to 12, characterised in that the support plates (36,38) are joined together, in particular welded, at associated edges by connecting plates (40,42) which extend substantially parallel to the longitudinal axis (D) of the vehicle.

14. An assembly according to Claim 13, characterised in that the connecting plates (40,42) are welded, rivetted or screwed to the bearing tube (14) with edges (50,52) abutting against the bearing tube (14).

15. An assembly according to either Claim 13 or Claim 14, characterised in that the box structure (34) formed by the support plates (36,38) and the connecting plates (40,42) is reinforced by inner reinforcing means (44).

16. An assembly according to any one of Claims 10 to 15, characterised in that the zones (40a,42a) of the support plates (36,38) and/or of the connecting plates (40,42) remote from the bearing tube are designed for fastening to the longitudinal members (48a,48b).

17. An assembly according to Claim 16, characterised in that the zones (40a,42a) of the support plates (36,38) and/or of the connecting plates (40,42) remote from the bearing tube are designed as fastening flanges.

18. An assembly according to Claim 17, characterised in that the fastening flanges (40a,42a) are in the form of multihole plates for screw-fastening or rivet-fastening to the longitudinal members (48a,48b).

19. An assembly according to any one of Claims 1 to 18, characterised in that the box structure (134) is connected to the bearing tube (114) by a flanged joint (160,162,164), in particular a bolted flanged joint.

20. An assembly according to Claim 19, characterised in that connecting flanges (160) of the bearing tube (114) are formed in one piece with the bearing tube (114).

21. An assembly according to either Claim 19 or Claim 20, characterised in that the connecting flanges (160) of the bearing tube (114) are disposed tangentially to an axis (Aₓ) of the bearing tube (114) and in the direction of this axis (Aₓ) are of elongate form, optionally with interruptions.

22. An assembly according to any one of Claims 19 to 21, characterised in that the flanges (162) of the box structure (134) are mounted on connecting plates (140,142) of the box structure (134), which connecting plates (140,142) are joined together by support plates (136,138), wherein the connecting plates (140,142) extend substantially parallel to the axis (Aₓ) of the bearing tube (114) and, at least in the vicinity of the bearing tube (114), the support plates (136,138) are substantially orthogonal to the axis (Aₓ) of the bearing tube (114).

23. An assembly according to Claim 22, characterised in that in the direction of the longitudinal axis (Aₓ) of the bearing tube (14) the flanges (162) of the box structure (134) are of elongate form, optionally with interruptions.

24. An assembly according to Claim 23, characterised in that the flanges (162) of the box structure (134) are directed towards one another.

25. An assembly according to Claim 24, characterised in that the flanges (160) of the bearing tube (114) bear on the upper side of the flanges (162) of the box structure (134).

## Revendications

1. Agencement d'un attelage de remorque (10) sur un véhicule tracteur (48),
dans lequel l'attelage de remorque (10) est fixé sur une tige de traction (12),
dans lequel en outre la tige de traction (12) est montée dans un tube formant palier (14) et
dans lequel le tube formant palier (14) est fixé sur un cadre de véhicule (48) du véhicule tracteur,
caractérisé
en ce que le tube formant palier (14) est soutenu contre des moments sur des longerons (48a, 48b) latéraux du cadre de véhicule, par une construction en caisson (34) rigide en soi, placée à l'intérieur de l'extension longitudinale de ces longerons (48a, 48b), en porte-à-faux vers le bas, construction qui est reliée avec le tube formant palier (14), dans une zone formant palier (36a, 38a), s'étendant le long du tube formant palier (14), du tube formant palier (14) et est reliée avec les longerons (48a, 48b), dans des zones de liaison (40a, 42a).

2. Agencement selon la revendication 1,
caractérisé
en ce que la zone formant palier (36a - 38a) s'étend sur au moins 30 %, de préférence au moins 50 %, et de manière encore préférée sur au moins 70 % du tube formant palier (14).

3. Agencement selon l'une des revendications 1 et 2,
caractérisé
en ce que la zone formant palier (36a - 38a) est adjacente à l'extrémité arrière dans le sens de traction D, du tube formant palier (14).

4. Agencement selon l'une des revendications 1 à 3,
caractérisé
en ce que le tube formant palier (14) est soutenu ponctuellement aux deux extrémités (36a, 38a) de la zone formant palier (36a à 38a).

5. Agencement selon l'une des revendications 1 à 4,
caractérisé
en ce que le tube formant palier (14) est relié, au moins aux extrémités (36a, 38a) de la zone formant palier (36a - 38a), avec la construction en caisson (34) par une liaison soudée (en 36a, 38a).

6. Agencement selon l'une des revendications 1 à 5,
caractérisé
en ce que la construction en caisson (34) est reliée, en fonctionnement, de manière inamovible avec les longerons (48a, 48b).

7. Agencement selon l'une des revendications 1 à 5,
caractérisé
en ce que la construction en caisson (34) est reliée, en fonctionnement, de manière amovible avec les longerons (48a, 48b).

8. Agencement selon l'une des revendications 1 à 7,
caractérisé
en ce que la construction en caisson (34) est prolongée, dans la zone de sa liaison avec les longerons (48a, 48b), par rapport à la zone formant palier (36a - 38a), dans la direction longitudinale (D) du tube formant palier (14).

9. Agencement selon l'une des revendications 1 à 8,
caractérisé
en ce que la construction en caisson (34) est élargie dans la zone de sa liaison avec les longerons (48a, 48b), en direction de l'axe transversal (Q), par rapport au diamètre extérieur du tube formant palier (14).

10. Agencement selon l'une des revendications 1 à 9,
caractérisé
en ce que la construction en caisson (34) présente à au moins une, de préférence aux deux extrémités de la zone formant palier (36a à 38a), une tôle formant palier (36, 38), qui, au moins dans la zone du tube formant palier (14), est approximativement orthogonale à l'axe longitudinal (D) du véhicule.

11. Agencement selon la revendication 10,
caractérisé
en ce que la tôle formant palier (36, 38) s'applique avec un bord d'application (36a, 38a) contre le tube formant palier (14), qui partant d'une ligne de sommet (46) de la surface périphérique extérieure du tube formant palier (14), s'étend dans les deux directions périphériques chaque fois sur un angle d'au moins 60°, de préférence d'au moins 75°, de manière encore préférée d'au moins 90°.

12. Agencement selon la revendication 11,
caractérisé
en ce que le bord d'application (36a à 38a) est soudé, vissé ou riveté avec le tube formant palier (14).

13. Agencement selon l'une des revendications 10 à 12,
caractérisé
en ce que les tôles formant palier (36, 38) sont reliées entre elles, en particulier soudées, sur des bords correspondants par des tôles de liaison (40, 42), qui s'étendent sensiblement parallèlement à l'axe longitudinal (D) du véhicule.

14. Agencement selon la revendication 13,
caractérisé
en ce que les tôles de liaison (40, 42) sont soudées, rivetées ou vissées avec le tube formant palier (14), par des bords (50, 52) s'appliquant contre le tube formant palier (14).

15. Agencement selon l'une des revendications 13 et 14,
caractérisé
en ce que la construction en caisson (34), formée par les tôles formant palier (36, 38) et les tôles de liaison (40, 42), est rendue rigide par des moyens de renfort (44) intérieurs.

16. Agencement selon l'une des revendications 10 à 15,
caractérisé
en ce que les zones (40a, 42a), éloignées du tube formant palier, des tôles formant palier (36, 38) ou/et des tôles de liaison (40, 42) sont conçues pour la fixation sur les longerons (48a, 48b).

17. Agencement selon la revendication 16,
caractérisé
en ce que les zones (40a, 42a), éloignées du tube formant palier, des tôles formant palier (36, 38) et/ou des tôles de liaison (40, 42), sont conçues comme des brides de fixation.

18. Agencement selon la revendication 17,
caractérisé
en ce que les brides de fixation (40a, 42a) se présentent comme des plaques à plusieurs trous pour une fixation vissée ou une fixation rivetée sur les longerons (48a, 48b).

19. Agencement selon l'une des revendications 1 à 18,
caractérisé
en ce que la construction en caisson (134) est reliée au tube formant palier (114) par une liaison à brides (160, 162, 164) en particulier une liaison à brides à vis.

20. Agencement selon la revendication 19,
caractérisé
en ce que des brides de liaison (160) du tube formant palier (114) sont réalisées d'un seul tenant avec le tube formant palier (114).

21. Agencement selon l'une des revendications 19 et 20,
caractérisé
en ce que les brides de liaison (160) du tube formant palier (114) sont disposées tangentiellement à un axe (Aₓ) du tube formant palier (114) et sont allongées en direction de cet axe (Aₓ), éventuellement avec des interruptions.

22. Agencement selon l'une des revendications 19 à 21,
caractérisé
en ce que des brides (162) de la construction en caisson (134) sont placées sur des tôles de liaison (140, 142) de la construction en caisson (134), lesquelles tôles de liaison (140, 142) sont reliées entre elles par des tôles formant palier (136, 138), les tôles de liaison (140, 142) s'étendant sensiblement parallèlement à l'axe (Aₓ) du tube formant palier (114) et les tôles formant palier (136, 138) étant sensiblement orthogonales à l'axe (Aₓ) du tube formant palier (114), au moins dans la zone du tube formant palier (114).

23. Agencement selon la revendication 22,
caractérisé
en ce que les brides (162) de la construction en caisson (134) sont allongées - éventuellement avec des interruptions - en direction de l'axe longitudinal (Aₓ) du tube formant palier (114).

24. Agencement selon la revendication 23,
caractérisé
en ce que les brides (162) de la construction en caisson (134) sont orientées les unes vers les autres.

25. Agencement selon la revendication 24,
caractérisé
en ce que les brides (160) du tube formant palier (114) reposent sur la face supérieure des brides (162) de la construction en caisson (134).
